# EUROPEAN PATENT SPECIFICATION

(11) **EP 2 938 575 B1**
(45) Date of publication and mention of the grant of the patent: **20.01.2021**
(21) Application number: 13867697.8
(22) Date of filing: 16.12.2013
(51) Int. Cl.: C02F 1/52, B01D 21/01, C01F 7/06, C08B 15/00, C08L 5/02, C02F 1/56, C02F 103/10, C02F 103/16, C02F 1/00, C02F 1/38

(54) **CHEMICAL TREATMENT TO IMPROVE RED MUD SEPARATION AND WASHING IN THE BAYER PROCESS**
CHEMISCHE BEHANDLUNG ZUR VERBESSERUNG VON ROTSCHLAMMTRENNUNG UND -WASCHUNG IM BAYERVERFAHREN
TRAITEMENT CHIMIQUE AMÉLIORANT LA SÉPARATION ET LE LAVAGE DES BOUES ROUGES DANS LE PROCÉDÉ BAYER

(30) Priority: 28.12.2012 US 201213729744
(43) Date of publication of application: 04.11.2015
(73) Proprietor: Nalco Company, Naperville, IL 60563 (US)
(72) Inventor: URBANI, Carl, Forrestfield, Western Australia 6058 (AU); KILDEA, John D., Baldivis, Western Australia 6171 (AU); CHESTER, Ryan, Heathridge, Western Australia 6027 (AU); WANG, Jing, Aurora, Illinois 60502 (US)
(74) Representative: Godemeyer Blum Lenze Patentanwälte Partnerschaft mbB - werkpatent
(86) International application number: PCT/US2013/075417
(87) International publication number: WO 2014/105484

(56) References cited:
- WO-A1-97/38018
- WO-A1-97/41064
- GB-A- 1 154 993
- US-A- 5 008 089
- US-A- 5 534 235
- US-A- 5 716 530
- US-A1- 2010 029 929
- US-A1- 2012 034 142
- US-A1- 2012 034 142
- US-B1- 6 726 845
- US-B1- 6 726 845

## Description

### Background of the Invention

The invention relates to compositions, methods, and apparatuses for improving the performance of primary settlers and washer circuits for red mud in a Bayer Process. As described for example in US Patents 6,814,873, 6,033,579, 6,048,463, and US Published Patent Application 2008/0257827, in the Bayer Process alumina trihydrate is extracted from bauxite ore. Bauxite ore is pulverized then goes through a digestion stage (where it is slurried in a caustic liquor medium and is heated under pressure), a clarification stage, a precipitation stage, a classification stage, and finally a calcination stage from which the final product is recovered.

In the clarification stage red mud is separated from the alumina in the ore. Red mud is the large percentage of the ore that remains insoluble after digestion with caustic medium. This insoluble fraction must be removed prior to the alumina trihydrate recovery step in the process so as to avoid contaminating the final Bayer Process product. The digestion slurry consists of finely suspended mud particles which are commonly removed by the addition of flocculants in large separation vessels called thickeners or settlers. The flocculant acts to bind the mud particles increasing their rate of settling in the thickener. The overflow liquor then typically reports to filters, often referred to as Security Filtration, to remove any remaining insoluble material prior to alumina trihydrate recovery. The red mud slurry from the thickener underflow contains valuable alumina and caustic in solution that is recovered in the Red Mud Washer Circuit otherwise known as a counter-current decantation (CCD) circuit. Over several stages, mud slurry is mixed with progressively more dilute (lower in valuable alumina and caustic) wash water. The advancing wash water progressively increases in caustic and alumina content as it recovers the valuables from the mud slurry, then ultimately exits as a dilution stream for use back into the process at an appropriate point. The resulting red mud is sent to disposal. Some examples of red mud clarification are described in US Patents 3,085,853, 3,397,953, 3,445,187, 3,541,009, 3,681,012, 4,767,540, 5,008,089 and GB 1 154 993.

Because of the cost associated with each additional filtration and dilution step, large savings and efficiencies can be realized from reducing the number or intensity of the required filtration and dilution steps. As a result, there is clear utility in novel methods of more effectively flocculating and separating red mud from the red mud-containing liquors.

### Brief Summary of the Invention

At least one embodiment of the invention is directed towards improving the process of separating and washing insoluble red mud solids in the Bayer process by addition of cross-linked polysaccharides in combination with flocculants in the primary settling and washing stages of the process.

### Detailed Description of the Invention

The following definitions are provided to determine how terms used in this application, and in particular how the claims, are to be construed. The organization of the definitions is for convenience only and is not intended to limit any of the definitions to any particular category.

***"Clarifier"*** means a separation device used for red mud clarification including: a thickener, a settler, or a washer.

***"Consisting Essentially of*"** means that the methods and compositions may include additional steps, components, ingredients or the like, but only if the additional steps, components and/or ingredients do not materially alter the basic and novel characteristics of the claimed methods and compositions.

***"Dextran"*** is a polysaccharide characterized as being an α-D-1,6 glucose-linked glucan with side chains 1-3 linked to the backbone units of the polysaccharide.

***"Distal"*** is the opposite of "Proximal" and means subsequent to a particular step in a sequential process.

***"Flocculant"*** means a composition of matter which when added to a liquid containing finely divided suspended particles, destabilizes and aggregates the solids through the mechanism of interparticle bridging, it may have a low charge density and a high molecular weight (in excess of 1,000,000).

***"Green Liquor"*** means the alumina containing liquor that has passed through a Security Filtration stage and no longer contains red mud.

***"Liquor"*** or ***"Bayer liquor"*** means a caustic, liquid medium that has run through a Bayer process in an industrial facility.

***"Polysaccharide"*** means a polymeric carbohydrate having a plurality of repeating units comprised of simple sugars, the C-O-C linkage formed between two such joined simple sugar units in a polysaccharide chain is called a glycosidic linkage, and continued condensation of monosaccharide units will result in polysaccharides, common polysaccharides are amylose and cellulose, both made up of glucose monomers, polysaccharides can have a straight chain or branched polymer backbone including one or more sugar monomers, common sugar monomers in polysaccharides include glucose, galactose, arabinose, mannose, fructose, rahmnose, and xylose.

***"Primary Settler Feed"*** means Bayer process digested slurry as charged to the first solids/liquid separation stage, it may be an admixture of the digested slurry plus dilution liquor, and the dilution liquor is routinely the counter current technique wash water from the red mud washing stages, the primary settler feed differs from the liquors or slurries subjected to clarification and/or separation in the subsequent clarification stage or the red mud washing stages by composition as to the solids content, dissolved sodium aluminate content, and total alkalinity. In addition, the primary settler feed also differs from the liquors or slurries subjected to clarification and/or separation in the subsequent clarification stage or the red mud washing stages in that no insoluble fraction thereof has received an earlier flocculation treatment.

***"Proximal"*** is the opposite of "Distal" and means prior to a particular step in a sequential process.

***"Red Mud"*** means the insoluble solid material which is a residual product from the Bayer liquor that does not freely dissolve during the digestion stage, or which precipitates as part of the digestion process. Red mud can comprise ferric oxide (from which the mud typically derives its red-brown color), alumina, silica, silicon oxide, calcium oxide, sodium alumino-silicates, and/or titanium oxides (depending on the specific compositions of the ore input into the Bayer process) as well as caustic and other materials from the digestion liquor that may be part of the liquid phase of the Bayer process red mud slurry.

***"Rheology"*** means the interrelatedness of the flow rate and the elastic, viscous and/or plastic properties of flowing matter.

***"Slurry"*** means a mixture comprising a liquid medium within which fine solid particles are dispersed or suspended.

***"Thickener"*** or ***"Settler"*** means a vessel used to effect a solid-liquid separation of a slurry, often with the addition of flocculants, the vessel constructed and arranged to receive a slurry, retain the slurry for a period of time sufficient to allow solid portions of the slurry to settle downward (underflow) away from a more liquid portion of the slurry (overflow), decant the overflow, and remove the underflow. Thickener underflow and thickener overflow are often passed on to filters to further separate solids from liquids.

***"Washer"*** means a vessel used to effect a solid-liquid separation of red mud from liquid by utilizing counter current decantation separating the material into an underflow (a highly concentrated suspension typically at the bottom of the washer), and an overflow (a clarified liquid stream typically at the top of the equipment), the liquid used to effect the counter current may be water, liquor a mixture of water and liquor or overflow from elsewhere in the Bayer Process.

In the event that the above definitions or a description stated elsewhere in this application is inconsistent with a meaning (explicit or implicit) which is commonly used, in a dictionary, the application and the claim terms in particular are understood to be construed according to the definition or description in this application, and not according to the common definition or dictionary definition. In light of the above, in the event that a term can only be understood if it is construed by a dictionary, if the term is defined by the Kirk-Othmer Encyclopedia of Chemical Technology, 5th Edition, (2005), (Published by Wiley, John & Sons, Inc.) this definition shall control how the term is to be defined in the claims.

Claim 1 is provided which defines the essential features of the invention. Preferred embodiments are described in dependent claims 2-11. At least one embodiment of the invention is directed towards a method of treating Bayer Process red mud slurry to enhance the recovery of caustic and alumina. The treatment can occur in settlers and in washer circuits. The method comprises contacting primary settler feed or washer feed slurry with a flocculant in combination with a modified polysaccharide. The method modulates the rheology of thickened red mud allowing higher underflow densities to be targeted in each vessel of the Wash Circuit or in the primary settlers.

Red mud slurry flow in the clarification stage suffers from a number of contradictory properties. Ideally the underflow of a settler or washer should have a very high density. Such a high density results from highly effective removal of soluble caustic and alumina from the red mud underflow, so effective in fact that the red mud comprises only insoluble materials. However as solids density in the underflow increases, the yield stress of the slurry will also increase and consequently this reduces the ability of the underflow to actually flow through the equipment used in the clarification process. As a result, in practice the underflow density must be kept below a degree of thickness even though this means that valuable alumina and caustic remain within the underflow. This is a costly practice which reduces the amount of actual alumina that can be recovered from a given sample of ore to an amount significantly below its theoretical yield.

Additionally, by reducing the level of suspended solids that remain in the supernatant above the flocculated slurry formed in the primary settler liquor, the solids to be removed during the subsequent clarification of the overflow by filtration are diminished.

In at least one embodiment the method alters the rheology (viscosity, elasticity, and/or plasticity) of the underflow that passes through washer(s) and/or settler(s) such that the underflow has properties that would otherwise be associated with an underflow slurry of lower solids density. This allows operators to increase the underflow density in one, some, or all of the vessels of the circuit, resulting in better extraction efficiency of alumina and caustic and increased throughput.

In at least one embodiment the underflow passing through at least a portion of the circuit has a density so high that but for the method, it would not be capable of passing through the washer(s) and/or settler(s) or would only be able to do so with the input of a significant amount of energy, effort, and/or cost.

Suitable flocculants generally have molecular weights in excess of 1,000,000 and often in excess of 5,000,000. The flocculant is anionic. The dose of flocculant depends on the properties of the slurry being treated and can be empirically determined by one of skill in the art. In general, the flocculant polymer dose required depends on both the nature of the feed slurry (settler or washer) and the type of flocculant used. However, typically dose rates are generally within the range of 10-500g/T based on polymer solids, per ton of red mud and more preferably 30-400g/T.

In at least one embodiment the flocculant is selected from the group consisting of: (i) homopolymers of acrylic acid, (ii) copolymers of acrylic acid and acrylamide, (iii) copolymers of acrylic acid and acrylamide modified to contain a hydroxamic acid moiety; and (iv) copolymers of acrylic acid and acrylamide modified to contain and comprise ammonium acrylate. In at least one embodiment the flocculant has a molecular weight greater than 10 million.

Similarly, while anionic polymer flocculants may be formed using anionic monomers, it is also possible to modify certain nonionic vinyl addition polymers to form anionically charged polymers. Polymers of this type include, for example, those prepared by the hydrolysis of polyacrylamide.

The flocculant may be prepared in the solid form, as an aqueous solution, as a water-in-oil emulsion, or as a dispersion in water. Representative anionic polymers include copolymers of acrylamide with sodium acrylate and/or 2-acrylamido 2-methylpropane sulfonic acid (AMPS) or an acrylamide homopolymer that has been hydrolyzed to convert a portion of the acrylamide groups to acrylic acid.

According to the invention the polysaccharide is cross-linked. The cross linking is achieved with a crosslinking agent. According to the invention the cross-linking is accomplished by an the interaction with a cross linking agent on an ethylenically unsaturated monomer either containing at least two sites of ethylenic unsaturation or containing one site of ethylenic unsaturation and one site of a reactive group such as an epoxide or an aldehyde. Representative Cross-Linking Agents include N,N-methylenebisacrylamide, N,N-methylenebismethacrylamide, polyethylene glycol diacrylate, ethylene glycol dimethacrylate, diethylene glycol dimethacrylate, triethylene glycol dimethacrylate, polyethylene glycol dimethacrylate, polypropylene glycol dimethacrylate, N-vinyl acrylamide, divinyl benzene, triallyl ammonium salts, N-methyl allylacrylamide, glycidyl acrylate, acrolein, methylolacrylamide, glyoxal, epihalohydrins, dialdehydes diglycidyl ethers, and the like, and any combination thereof. In at least one embodiment the crosslinking agent is added to the cross-linked polymers at a dosage of from about 0.0001 to about 10, preferably from about 0.0001 to about 0.2 weight percent based on the weight of the polymers.

In at least one embodiment, upon flocculation of a primary settler feed, a clear liquor/mud interface will form, and will gradually settle, providing a clear liquor supernatant layer overlying a mud layer. The lower mud layer contains the flocculated material. The overlying supernatant is the liquor that is separated for subsequent filtration and contains only a minimal amount of mud solids. The invention diminishes the amount of suspended solids in such supernatant, and hence decreases the extent of filtration required to obtain a given purity of sodium aluminate solution.

In at least one embodiment, the solids captured by the combination of the flocculant and modified polysaccharide contain more of the minerals and solids comprised of silica and potassium such that the solids reporting to the overflow of the clarifier contain a lower amount of such materials, resulting in selective flocculation and settling of such materials.

In at least one embodiment, the polymeric flocculant and the polysaccharide are both added to the primary settler feed as aqueous solutions to facilitate rapid dispersion of each agent within the primary settler feed.

In at least one embodiment the method is conducted according to and/or in conjunction with some or all of one or more of the: compositions, apparatuses, and methods used in the Bayer Process described in one or more of: US Patents 6,365,116, 6,726,845, 5,217,620, 5,478,477, 5,387,405, International Patent Application WO 99/29626, and scientific papers: Step change improvements in underflow rheology by Berger A. et al., Proceedings of the 14th International Seminar on Paste and Thickened Tailings, pp. 135-141 (2011), and Effect of Surfactants on Bauxite Residues Suspensions Viscosity by Frost, R, et al, Colloids and Surfaces A: Physicochemical and Engineering Aspects, 292(1), pp. 21 - 26 (2007).

### EXAMPLES

The foregoing may be better understood by reference to the following examples, which are presented for purposes of illustration and are not intended to limit the scope of the invention.

Red mud settling tests were performed in order to evaluate the effect on liquor overflow clarity and settling rate with and without addition of a cross-linked polysaccharide to a standard anionic flocculant treatment. These tests involved mixing a known amount of flocculant solution (and polysaccharide where appropriate) into a cylinder containing Bayer process red mud slurry. After mixing, the cylinders were left to settle and after a given period of time the liquor at the surface of the cylinder was sampled, filtered and the filtered residue weighed. The clarity of the liquor is described in terms of overflow solids with units of gram per litre (essentially the lower the overflow solids the more effective the chemical treatment strategy).

### Example 1

Samples of plant settler feed slurry were treated using a 0.1% solution of a commercially available 100% anionic latex flocculant and a 13% solution of a modified (cross-linked) polysaccharide. In this case the modified polysaccharide was dextran. Table 1 details the overflow solids for red mud slurry flocculated with (i) anionic flocculant and (ii) a combination of anionic flocculant and the cross-linked polysaccharide. Addition of modified polysaccharide to the slurry, at a dose rate in the order of 30 ppm, resulted in approximately 50% reduction in overflow solids. A substantial reduction in overflow solids was achieved over the flocculant dose range of 40 - 130 g/T.

**Table 1. Overflow solids measured from red mud settling tests using a standard anionic flocculant with and without additional treatement with modified polysaccharide.**

| Treatment | Dose Anionic Flocc (g/T) | Dose MPS (ppm active) | Overflow Solids (g/L) |
|---|---|---|---|
| AF | 43 | 0 | 1.28 |
| AF + MPS | 43 | 3.6 | 0.54 |
| AF | 85 | 0 | 1.19 |
| AF + MPS | 85 | 4.2 | 0.45 |
| AF | 128 | 0 | 0.71 |
| AF + MPS | 128 | 4.4 | 0.44 |

| | | | |
|---|---|---|---|
| AF = Anionic Flocculant MPS = Modified polysaccharide (cross-linked dextran) | | | |

### Example 2

The method of application of the modified polysaccharide was assessed by addition of a modified polysaccharide prior to, with or after the flocculant addition. The anionic flocculant and modified polysaccharide were the same as those used in example 1 as was the test method. Slurry used was again plant settler feed. Table 2 details the overflow solids when the modified polysaccharide was pre-dosed, and co-dosed with the anionic flocculant in one set of tests and and when it was co-dosed and post-dosed with the anionic flocculant in a second set of tests. The modified polysaccharide was effective in all methods of application, reducing the overflow solids when compared to the same dose of anionic flocculant applied without additional modified polysaccharide.

**Table 2. Overflow data from settling tests comparing the method of application of a modified polysaccharide when applied with a conventional anionic flocculant.**

| Dose Anionic Flocc (g/T) | Dose MPS (ppm active) | MPS added relative to flocculant | Overflow Solids (g/L) |
|---|---|---|---|
| 73 | 0 | - | 0.63 |
| 73 | 5.7 | Pre-dose | 0.29 |
| 73 | 5.7 | Co-dose | 0.31 |
| | | | |
| 73 | 0 | - | 0.69 |
| 73 | 5.7 | Post-dose | 0.32 |
| 73 | 5.7 | Co-dose | 0.37 |

### Example 3

The use of polysaccharides such as dextran has previously been identified and used in combination with anionic flocculants as a clarity aid in red mud settlers (as described, for example, in US 3,085,853). Red mud settling tests, as described above, were conducted to assess the relative efficacy of a modified (cross-linked) polysaccharide compared to the same unmodified polysaccharide. The anionic flocculant and modified polysaccharide were the same as those used in example 1. The modified and unmodified polysaccharide solutionss contained the same amount of polysaccharide in each treatment. Table 3 details the overflow solids of red mud treated with a combination of (i) anionic flocculant and cross-linked dextran and (ii) anionic flocculant with dextran. In this example a commercially available, 100% anionic flocculant was again used but it was a different product to that used in examples 1 and 2.

**Table 3: Overflow solids from red mud testing with modified polysaccharide and unmodified polysaccharide combinations with anionic flocculant.**

| Red Mud Treatment Regime | Anionic Flocculant Dose (g/T) | Polysaccharide Dose (ppm active) | Overflow Solids (g/L) |
|---|---|---|---|
| Anionic Flocculant | 75 | 0 | 0.43 |
| Anionic Flocculant + Polysaccharide | 75 | 0.60 | 0.34 |
| | | 1.20 | 0.33 |
| Anionic Flocculant + Modified Polysacchardide | 75 | 0.78 | 0.31 |
| | | 1.56 | 0.29 |

The data demonstrates that addition of modified polysaccharide is surprisingly more effective at reducing overflow solids compared with the use of unmodified polysaccharide.

### Example 4

Analysis of the solids obtained from settling tests conducted as described in the previous examples was completed to determine the nature of the solids removed by the application of modified polysaccharide. Red mud settling tests were completed using a combination of commercially available hydroxamated anionic flocculant both with and without additional application of a cross linked polysaccharide. The treatment and overflow solids obtained is listed in table 4.

**Table 4. Overflow solids from red mud settling tests using a hydroxamated anionic flocculant and modified polysaccharide.**

| Dose Anionic Flocculant (g/T) | Dose MPS (ppm active) | Overflow Solids (mg/L) |
|---|---|---|
| 150 | 0 | 112 |
| 150 | 1 | 72 |
| 150 | 2 | 62 |
| 150 | 3.5 | 45 |

Additionally, samples of the overflow solids were collected, dried and subjected to X-ray fluorescence spectroscopy (XRF) to determine the elemental components present in the overflow. Table 5 shows the amount and relative change in a range of elements analyzed in the treated samples. Surprisingly treatment with the cross-linked polysaccharide results in significantly less silica and potassium containing materials reporting in the overflow solids. When compared to the reduction in the relative amounts of other elements such as iron, titanium and calcium, there is a lot less silica and potassium in the treated samples. This indicates that the modified polysaccharide is selective in removing insoluble minerals which may be high in silica and potassium content. Examples of such minerals would be muscovite or mica.

**Table 5. Concentration of product (expressed as ppm or mg of analyte per litre of overflow)**

| Analyte | Flocc treatment only | Flocc + MPS (1ppm) | Flocc + MPS (2ppm) | Flocc + MPS (3.5ppm) | % Reduction in component from MPS treatment (3.5ppm) vs Flocc only treatment (%) |
|---|---|---|---|---|---|
| Fe₂O₃ | 39.3 | 31.4 | 25.4 | 19.4 | 50.6 |
| K₂O | 2.69 | 1.75 | 1.28 | 0.81 | 69.9 |
| SiO₂ | 18.6 | 12.5 | 9.7 | 5.8 | 68.8 |
| CaO | 1.34 | 1.08 | 0.90 | 0.73 | 45.5 |
| TiO₂ | 5.65 | 4.70 | 3.89 | 3.09 | 45.4 |

### Example 5

Raked settling tests conducted in an Imhoff cone were performed to evaluate the effect of a flocculant / modified polysaccharide combination on the flow characteristics and rheology of flocculated red mud. These tests involved mixing one litre of Bayer plant final washer feed red mud slurry together with a known amount of conventional flocculant solution and modified polysaccharide solution in a cylinder. After mixing, the slurry was immediately transferred to an Imhoff cone and the slurry was then raked to a specific mud bed volume (bed underflow density was calculated from the bed volume and known feed solids concentration). The Imhoff cone plug was then released and the time taken for the thickened slurry to discharge from the cone was measured. The time required for discharge of the entire slurry is a measure of mud flow-ability (or rheology). This discharge time was compared with feed slurry treated with flocculant alone (the 'normal' process for the settler and washer circuit). The faster the discharge rate the better the mud underflow rheology and ultimately properties for pumping from the thickener underflow.

Table 6 details the average discharge rate of the thickened red mud slurry from the raked Imhoff cone after treatment with flocculant and after treatment with the combination of flocculant and modified polysaccharide. The flocculant dose was kept constant at 100 g/T while the dose of modified polysaccharide (when applied) was 3.75ppm. In this case, the modified polysaccharide used was a cross-linked dextran. The flocculant used was a conventional polyacrylate/polyacrylamide flocculant commercially available and typically used for red mud settling in washers.

**Table 6: Average time taken to discharge consolidated red mud slurry from an Imhoff cone across a range of average bed underflow densities. Flocculant dose was constant at 100 g/T. Polysaccharide dose was 3.75ppm.**

| **Treatment Regime** | **Underflow Density (g/100mL)** | **Discharge Time Recorded (sec)** | **Average Discharge Rate (mL/sec)** |
|---|---|---|---|
| **Flocculant** | 20.0 | 10 | 100 |
| | 21.3 | 60 | 17 |
| | 21.4 | >300 | 0 |
| | 22.9 | >300 | 0 |
| | 25.0 | >300 | 0 |
| | 34.0 | >300 | 0 |
| **Flocculant + Modified Polysaccharide** | 21.3 | 10 | 100 |
| | 22.5 | 10 | 100 |
| | 25.0 | 10 | 100 |

Raking of slurry treated with conventional flocculant to an average underflow density of greater than 21%, resulted in effectively no flow when the plug was removed. Effectively the slurry did not discharge from the Imhoff cone due to the poor flow characteristics of the raked, consolidated mud at the base of the cone.

This was compared to the results obtained after raking slurry that was treated with the same dose of conventional flocculant together with modified polysaccharide (3.75ppm). Across a similar range of high average underflow densities, slurry discharged from the cone without restriction (-100 mL/sec). This is a significant increase in the flow properties of the red mud when compared to the control test (flocculant only treatment).

In a separate test mud was treated in a similar manner (the same flocculant at the same dose) but the modified polysaccharide dose was reduced to 0.75ppm. When consolidated to an average underflow density of 23.8g/100mL a discharge time of 19 seconds was recorded (average discharge rate of 53ml/sec). Comparing this to the data from Table 1, consolidation of mud to this concentration without addition of modified polysaccharide would be expected to result in no flow, while a higher dose of modified polysaccharide (3.75) clearly results in substantially higher flow rates.

The results of these tests indicate that addition of flocculant and polysaccharide in combination to a red mud washer circuit or primary settler would enable the targeted underflow density to be substantially increased while fluid characteristics of the underflow solids could be maintained or enhanced.

While this invention may be embodied in many different forms, there are described in detail herein specific preferred embodiments of the invention. The present disclosure is an exemplification of the principles of the invention and is not intended to limit the invention to the particular embodiments illustrated.

All ranges and parameters disclosed herein are understood to encompass any and all subranges subsumed therein, and every number between the endpoints. For example, a stated range of "1 to 10" should be considered to include any and all subranges between (and inclusive of) the minimum value of 1 and the maximum value of 10; that is, all subranges beginning with a minimum value of 1 or more, (e.g. 1 to 6.1), and ending with a maximum value of 10 or less, (e.g. 2.3 to 9.4, 3 to 8, 4 to 7), and finally to each number 1, 2, 3, 4, 5, 6, 7, 8, 9, and 10 contained within the range. All percentages, ratios and proportions herein are by weight unless otherwise specified.

## Claims

1. A method for treating Bayer Process liquor containing red mud comprising:
(a) adding to the slurry an anionic flocculant and a cross-linked polysaccharide and (b) removing flocculated red mud contained in the Bayer process liquor by at least one of: sedimentation, centrifugation, filtration, the use of a washer, and the use of a settler,
wherein the cross linking is achieved with a crosslinking agent selected from the group consisting of N,N-methylenebisacrylamide, N,N-methylenebismethacrylamide, polyethylene glycol diacrylate, ethylene glycol dimethacrylate, diethylene glycol dimethacrylate, triethylene glycol dimethacrylate, polyethylene glycol dimethacrylate, polypropylene glycol dimethacrylate, N-vinyl acrylamide, divinyl benzene, triallyl ammonium salts, N-methyl allylacrylamide, glycidyl acrylate, acrolein, methylolacrylamide, glyoxal, epihalohydrins, dialdehydes diglycidyl ethers, and any combination thereof.

2. The method of claim 1 in which the cross-linked polysaccharide is added to the slurry prior to the addition of the flocculant.

3. The method of claim 1 in which the cross-linked polysaccharide is added to the slurry after the addition of the flocculant.

4. The method of claim 1 in which the cross-linked polysaccharide is added to the liquor at the same time as the addition of the flocculant.

5. The method of claim 1 in which the cross-linked polysaccharide and the flocculant are added to liquor containing red mud which is primary settler feed or feed slurry of a red mud washer.

6. The method of claim 1 in which the flocculant is selected from the list consisting of: (i) homopolymers of acrylic acid, (ii) copolymers of acrylic acid and acrylamide, (iii) copolymers of acrylic acid and acrylamide modified to contain a hydroxamic acid moiety, and (iv) copolymers of acrylic acid and acrylamide modified to contain and comprise ammonium acrylate, and (v) any combination thereof.

7. The method of claim 1 in which the cross-linked polysaccharide comprises two or more different types of polysaccharide polymers.

8. The method of claim 1 in which the cross-linked polysaccharide is cross-linked dextran.

9. The method of claim 1 in which the flocculant has a molecular weight of greater than 10 million.

10. The method of claim 1 in which the method further comprises the step of raking the liquor after the addition of the flocculant and a cross-linked polysaccharide.

11. The method of claim1 comprising the step of reducing the overflow solids in a clarifying vessel.

## Patentansprüche

1. Verfahren zur Behandlung von Bayer-Prozessflüssigkeit, die Rotschlamm enthält, umfassend:
(a) Zugeben eines anionischen Flockungsmittels und eines vernetzten Polysaccharids zu der Aufschlämmung und (b) Entfernen von ausgeflocktem Rotschlamm, der in der Bayer-Prozessflüssigkeit enthalten ist, durch mindestens eines von:
Sedimentation, Zentrifugation, Filtration, Verwendung einer Waschvorrichtung und der Verwendung einer Absetzvorrichtung, wobei die Vernetzung mit einem Vernetzungsmittel erreicht wird, das aus der Gruppe ausgewählt ist, die aus N,N-Methylenbisacrylamid, N,N-Methylenbismethacrylamid, Polyethylenglykoldiacrylat, Ethylenglykoldimethacrylat, Diethylenglykoldimethacrylat, Triethylenglykoldimethacrylat, Polyethylenglykoldimethacrylat, Polypropylenglykoldimethacrylat, N-Vinylacrylamid, Divinylbenzol, Triallylammoniumsalze, N-Methylallylacrylamid, Glycidylacrylat, Acrolein, Methylolacrylamid, Glyoxal, Epihalohydrinen, Dialdehyd-Diglycidylethern, und einer beliebigen Kombination davon besteht.

2. Verfahren nach Anspruch 1, bei dem das vernetzte Polysaccharid vor der Zugabe des Flockungsmittels zur Aufschlämmung zugegeben wird.

3. Verfahren nach Anspruch 1, bei dem das vernetzte Polysaccharid nach der Zugabe des Flockungsmittels zur Aufschlämmung zugegeben wird.

4. Verfahren nach Anspruch 1, bei dem das vernetzte Polysaccharid der Flüssigkeit zur gleichen Zeit wie die Zugabe des Flockungsmittels zugegeben wird.

5. Verfahren nach Anspruch 1, bei dem das vernetzte Polysaccharid und das Flockungsmittel zu einer Flüssigkeit gegeben werden, die roten Schlamm enthält, der primäres Absetzfutter oder Futteraufschlämmung eines Rotschlammwäschers ist.

6. Verfahren nach Anspruch 1, bei dem das Flockungsmittel aus der Liste ausgewählt ist, bestehend aus:
(i) Homopolymere von Acrylsäure, (ii) Copolymere von Acrylsäure und von Acrylamid, (iii) Copolymere von Acrylsäure und Acrylamid, die modifiziert sind, um einen Hydroxamsäureanteil zu enthalten, und (iv) Copolymere von Acrylsäure und von Acrylamid, die modifiziert sind, um Ammoniumacrylat zu enthalten und umfassen, und (v) eine beliebige Kombination davon.

7. Verfahren nach Anspruch 1, bei dem das vernetzte Polysaccharid zwei oder mehr verschiedene Arten von Polysaccharidpolymeren umfasst.

8. Verfahren nach Anspruch 1, bei dem das vernetzte Polysaccharid vernetztes Dextran ist.

9. Verfahren nach Anspruch 1, bei dem das Flockungsmittel ein Molekulargewicht von mehr als 10 Millionen aufweist.

10. Verfahren nach Anspruch 1, bei dem das Verfahren ferner nach der Zugabe des Flockungsmittels und eines vernetzten Polysaccharids den Schritt des Harkens der Flüssigkeit umfasst.

11. Verfahren nach Anspruch 1, umfassend den Schritt des Reduzierens der Überlauffeststoffe in einem Klärgefäß.

## Revendications

1. Procédé de traitement d'une liqueur de procédé Bayer contenant de la boue rouge comprenant:
(a) l'ajout à la bouillie d'un floculant anionique et d'un polysaccharide réticulé et (b) l'élimination de la boue rouge floculée contenue dans la liqueur de procédé Bayer par :
sédimentation, et/ou centrifugation, et/ou filtration et/ou l'utilisation d'une laveuse et/ou l'utilisation d'un décanteur,
dans lequel la réticulation est réalisée au moyen d'un agent de réticulation choisi dans le groupe constitué de N, N-méthylènebisacrylamide, de N, N-méthylènebisméthacrylamide, de diacrylate de polyéthylène glycol, de diméthacrylate d'éthylène glycol, de diméthacrylate de diéthylène glycol, de diméthacrylate de triéthylène glycol, de diméthacrylate de polyéthylène glycol, de diméthacrylate de polypropylène glycol, de N-vinyl acrylamide, de divinyl benzène, de sels de triallyl ammonium, de N-méthyl allylacrylamide, de glycidyl acrylate, d'acroléine, de méthylolacrylamide, de glyoxal, d'épihalohydrines, d'éthers de dialdéhydes diglycidyle, et de toute combinaison de ceux-ci.

2. Procédé selon la revendication 1 dans lequel le polysaccharide réticulé est ajouté à la bouillie avant l'ajout du floculant.

3. Procédé selon la revendication 1 dans lequel le polysaccharide réticulé est ajouté à la bouillie après l'ajout du floculant.

4. Procédé selon la revendication 1 dans lequel le polysaccharide réticulé est ajouté à la liqueur en même temps que l'ajout du floculant.

5. Procédé selon la revendication 1, dans lequel le polysaccharide réticulé et le floculant sont ajoutés à la liqueur contenant de la boue rouge qui est une alimentation de décanteur primaire ou une bouillie d'alimentation d'une laveuse de boue rouge.

6. Procédé selon la revendication 1 dans lequel le floculant est choisi dans la liste constituée : (i) d'homopolymères d'acide acrylique, (ii) de copolymères d'acide acrylique et d'acrylamide, (iii) de copolymères d'acide acrylique et d'acrylamide modifiés pour contenir une fraction d'acide hydroxamique, et (iv) de copolymères d'acide acrylique et d'acrylamide modifiés pour contenir et comprendre de l'acrylate d'ammonium, et (v) toute combinaison de ceux-ci.

7. Procédé selon la revendication 1, dans lequel le polysaccharide réticulé comprend deux types différents ou plus de polymères polysaccharides.

8. Procédé selon la revendication 1 dans lequel le polysaccharide réticulé est un dextrane réticulé.

9. Procédé selon la revendication 1 dans lequel le floculant a un poids moléculaire supérieur à 10 millions.

10. Procédé selon la revendication 1 dans lequel le procédé comprend en outre l'étape de ratissage de la liqueur après l'ajout du floculant et d'un polysaccharide réticulé.

11. Procédé selon la revendication 1 comprenant l'étape de réduction des débordements solides dans une cuve de clarification.
